# EUROPÄISCHE PATENTSCHRIFT

(11) **EP 0 363 322 B1**
(45) Veröffentlichungstag und Bekanntmachung des Hinweises auf die Patenterteilung: **08.02.1995**
(21) Anmeldenummer: 89810736.2
(22) Anmeldetag: 27.09.1989
(51) Int. Cl.: C09B 67/20, C09B 41/00, C09B 67/10, C09B 67/14, C11D 7/12, C11D 11/00

(54) **Verfahren zur Herstellung von Pigmentzusammensetzungen**
Process for the manufacture of pigment preparations
Procédé de préparation de compositions pigmentaires

(30) Priorität: 06.10.1988 GB 8823483; 21.07.1989 GB 8916752
(43) Veröffentlichungstag der Anmeldung: 11.04.1990
(73) Patentinhaber: CIBA-GEIGY AG, 4002 Basel (CH)
(72) Erfinder: McGeachie McGrae, James, Kilmarnock Scotland KA3 5EU (GB); Forsythe, Neil Colin William, Kelvinbridge Glasgow Scotland (GB)

(56) Entgegenhaltungen:
- CH-A- 301 814
- CH-A- 322 874
- DE-A- 3 031 444
- DE-C- 889 042
- DE-C- 956 709
- FR-A- 2 300 789
- FR-A- 2 384 004
- FR-A- 2 427 366

## Beschreibung

Der vorliegende Erfindungsgegenstand betrifft ein Verfahren zur Herstellung von Pigmentzusammensetzungen und ihre Verwendung zum Färben von Druckfarben und Anstrichstoffen.

Es ist wohl bekannt, dass einen Träger enthaltende Pigmentzusammensetzungen zu einer nicht-pulverartigen Form formuliert werden können. Die in derartigen Systemen verwendeten Träger werden sorgfältig ausgewählt, so dass die Einarbeitung der Pigmentzusammensetzung in das End-Applikationsmedium bestens erleichtert wird.

Das eigentliche Grundprinzip in der Herstellung dieser Art Pigmentpräparate liegt darin, dass das organische Pigment eine höhere Affinität gegenüber einer öligen Phase als einer wässrigen Phase aufweist und daher aus der wässrigen Synthesephase in eine geeignete ölige oder organische Phase überführt werden kann. Die hierfür in Frage kommenden Verfahrensmerkmale und die bei dieser Prozessart eingesetzten Apparaturen sind verschiedenartig, wofür mehrere chemische und mechanische Hilfsmittel beschrieben wurden.

Eines der vielen Vorteile derartiger Pigmentzusammensetzungen über konventionelle Pulver schliesst auch die Tatsache ein, dass das Pigment eine schonendere Trocknung, wenn überhaupt, benötigt, da das Wasser zum grössten Teil bereits bei der Flushverfahrensstufe ausgeschieden wird; zudem braucht das Pigment nicht gemahlen zu werden. Ausserdem weist das Pigment eine leicht brauchbare Form auf und benötigt weniger Arbeit bei der Dispergierung im Applikationsmedium. Beim Einsatz von geflushten Pigmenten können ferner die mit der herkömmlichen Verwendung von Pigmenten verbundenen Probleme, z.B. Stäuben und Nicht-Dosierbarkeit, leicht überwunden werden.

Die japanische Patentanmeldung Sho 63-95270 (Toyo Ink) offenbart eine Methode zur Herstellung eines Farbmittelgranulates, indem eine Pigmentsuspension direkt in einen öligen Anstrichstoff überführt wird, wobei hierfür eine Schnelldispergierapparatur eingesetzt wird. Der verwendete Anstrichstoff ist ein kolophoniummodifiziertes phenolisches Harz in einem hochsiedendem Petroleumdestillat.

Im US-Patent Nr. 4765841 (KVK) erfolgt die Herstellung einer organischen Pigmentdispersion in nicht-wässrigem Medium durch Mischen der wässrigen Pigmentsuspension mit dem nicht-wässrigen Medium in Gegenwart eines Dispergierungsmittels unter energischem Rühren. Die erhaltene Pigmentdispersion wird isoliert und enthält noch z.B. 35 % Wasser; diese Dispersion wird mit Hilfe eines spezifischen Zweiwalzenwerkes entwässert, und das resultierende Produkt besteht aus einem Pigmentkonzentrat mit typischerweise 60 % Pigment.

Die EP-Patentanmeldung Nr. 0273236 (BASF) offenbart ferner die Herstellung einer Tinte durch Mischen einer Pigmentsuspension mit einer Emulsion bestehend aus einem oleophilen Harz, einem organischen Lösungsmittel oder Gemischen davon, einem emulgierenden Mittel und Wasser. Das Pigment/Emulsion-Gemisch wird dann aufkonzentriert, und eine Tinte wird direkt aus diesem Konzentrat hergestellt.

Bei jedem dieser bekannten Prozesse wird die Vereinigung bzw. das Mischen des oleophilen Trägers mit dem Pigment wie folgt durchgeführt:
a) der Träger wird mit dem vollständig synthetisierten Pigment gemischt, d.h. nachdem die Pigmentsynthese vollendet ist, und
b) ein Harz wird entweder als Lösung z.B. in einem Destillat oder in der Form einer Emulsion eingesetzt, wobei im letztgenannten Fall der Einsatz eines Emulgiermittels erforderlich ist.

Im Britischen Patent Nr. 1589159 wird ferner bei der Nachbehandlungsstufe eine organische Säure zu einer Pigmentsuspension gegeben, wobei das Pigment bei niedrigem pH-Wert zum grössten Teil in die organische Säure überführt wird. Zum Lösen der Säure wird dann zur wässrigen Phase Alkali gegeben, und das Pigment wird in Perlform im wesentlichen säurefrei isoliert.

Es wurde nun gefunden, dass die Behandlung des Pigments auf eine neue Art und Weise mit einem mit Wasser nicht mischbaren Trägersystem zu einer Pigmentzusammensetzung mit verbesserten physikalischen Eigenschaften und verbesserter Herstellbarkeit führt.

Der vorliegende Erfindungsgegenstand betrifft demnach ein Verfahren zur Herstellung einer Pigmentzusammensetzung, indem man
Ia) ein Pigment vor oder während seiner Synthese mit einem mit Wasser nicht mischbaren, ein Harz enthaltenden Trägermedium behandelt und dann die Pigmentsynthese unter Bildung der das Pigment und das Trägermedium enthaltenden Pigmentzusammensetzung vervollständigt, und dann die erhaltene Pigmentzusammensetzung isoliert, oder gegebenenfalls
Ib) die erhaltene Pigmentzusammensetzung mit einer aliphatischen organischen Säure und gegebenenfalls einem mit Wasser nicht mischbaren Trägermedium weiter behandelt, den pH-Wert des resultierenden Gemisches zuerst auf unter 7,0 dann über 7,0 einstellt, so dass die organische Säure in die wässrige Phase überführt wird, und dann die das Pigment und das Trägermedium enthaltende Pigmentzusammensetzung isoliert.

Gemäss Verfahrensstufe Ia) der vorliegenden Erfindung kann das Trägermedium mit einem oder mehreren Pigmentvorläufern, z.B. mit einer Diazo- oder Tetrazokomponente oder einer Azokupplungskomponente, behandelt werden oder dem Pigmentsynthesereaktor, entweder vor oder während der Pigmentsynthese, zugegeben werden. Das Trägermedium kann in Form einer Schmelze, einer Lösung, falls möglich als einfache organische Flüssigkeit, oder als Emulsion zugegeben werden, gegebenenfalls in Kombination mit einem emulgierenden Stabilisator.

Das erfindungsgemäss verwendete Trägermedium kann ein beliebiges ein Harz enthaltendes Medium sein, welches üblicherweise in der gewünschten End-Ueberzugszusammensetzung vorhanden ist, z.B. in einem Druckfarbensystem. Bedingt durch die Endapplikation, können geeignete Trägermedien verwendet werden, z.B. Harze, wie Alkyd- oder Phenolharze, oder Abwandlungsprodukte davon, wie mit Kolophonium modifizierte Phenolharze, ferner Kolophonium oder Kolophoniumderivate, Malein- und Acrylharze oder andere in der Herstellung von Druckfarben bekannte Harze.
Nicht Harz-Systeme können auch im Trägermedium enthalten sein, z.B. Oeldestillate mit einem Siedepunktbereich von 260 bis 290°C, Pflanzenöle und Derivate davon, Leim- oder Tungöle.

Verschiedene Zusätze, wie oberflächenaktive Mittel, Netzmittel, Emulgiermittel und Dispergiermittel, können gegebenenfalls mitverwendet werden, wobei jeder dieser Zusätze im vorliegenden Verfahren und/oder in den Anwendungen des Pigmentkonzentrates mithelfen kann. Weitere Zusätze, z.B. in der Herstellung von Pigmentsuspensionen üblich verwendete und die Pigmenteigenschaften verbessernde Farbstoffe, können auch verwendet werden.

Die gemäss Verfahrensstufe Ib) verwendete aliphatische organische Säure ist bevorzugt eine lineare oder verzweigte, gesättigte oder ungesättigte Carbonsäure mit 5 bis 18 C-Atomen, ganz bevorzugt aber eine geradkettige oder verzweigte gesättigte Alkylcarbonsäure mit 6 bis 10 C-Atomen, z.B. n-Hexansäure, n-Heptansäure, 2-Ethylhexansäure, n-Octansäure, n-Nonansäure oder n-Decansäure.

Das relative Verhältnis Pigment/Trägermedium in der Endpigmentzusammensetzung kann innerhalb eines breiten Umfangs variieren; das Pigment/Trägermedium-Verhältnis kann zwischen 1:2 und 20:1 (Gewichtsteile) variieren, wobei nicht immer die ganze Menge des Trägers während einer einzigen Verfahrensstufe gemäss Ia) oder Ib) zugegeben werden muss; Die Zugabe des ganzen Trägermediums kann während beiden Verfahrensstufen Ia) und Ib) erfolgen. Die Behandlung der Pigmentzusammensetzung gemäss Ib) mit der organischen Säure kann nach Isolierung der Zusammensetzung gemäss Ia) oder direkt ohne Isolierung gemäss Ia) durchgeführt werden.

Der Grad der bei jeder der obigen Verfahrensstufen angewandten Scherkräfte hängt von der Viskosität der hergestellten Pigmentzusammensetzung und daher von der der Pigmentsuspension zugegebenen Trägermenge ab. Konventionelle Rührer, z.B. die bei der Herstellung von Pigmentsuspensionen üblich verwendeten Rührer, können eingesetzt werden. Falls erwünscht, können auch höhere Scherkräfte, z.B. mit Hilfe von Hochtouren-Mischern /Emulgierwerken, wie Silverson-Mischer (Ultraschallmischer bei etwa 20 kHz), oder Ultraschallsonden, eingesetzt werden.

Das erfindungsgemässe Verfahren kann mit kontinuierlichen Herstellungsverfahren von Pigmentzusammensetzungen, z.B. mit einer Kugelmühle, kombiniert werden.

Die erfindungsgemäss erhaltenen Produkte können nach konventionellen Verfahren, z.B. in einer Filterpresse oder auf einem Bandfilter, mit einem Vibriersieb, einer Zentrifuge oder durch Saugen, isoliert werden. Die Pigmentzusammensetzungen können dann gegebenenfalls getrocknet werden, z.B. in einem Ofen, einem Mikrowellenofen oder mit Hilfe einer nicht statischen Technik, wie in einem Fluidbett. Der Wassergehalt der End-Pigmentzusammensetzung kann Werte von weniger als 1 % bis zu 75 Gew.% betragen.

Die physikalische Form der erfindungsgemäss erhaltenen Pigmentzusammensetzung kann zwischen einer flüssigen Paste und einem getrockneten Granulat variieren, dies abhängig von der angewandten Trocknung, der Isolierungsmethode und der Menge des Trägers im Pigment. Nach der Isolierungsstufe, vor dem Trocknen, kann der Wassergehalt der Zusammensetzung typischerweise etwa 40 Gew.% betragen.

Als Pigmentkomponente in den erfindungsgemäss hergestellten Zusammensetzungen kann jedes in Druckfarben verwendete organische Pigment eingesetzt werden. Geeignete Pigmente sind z.B. Azopigmente, Azomethinpigmente oder Metallsalze davon, Dioxazin-, Chinacridon-, Anthrachinon-, Isoindolin-, Isoindolinon- oder Phthalocyaninpigmente. Gemische von Pigmenten können verwendet werden. Bevorzugt sind Azopigmente.

Die erfindungsgemäss erhaltenen Pigmentzusammensetzungen liegen in einer leicht anwendbaren Form vor, sie sind staubarm oder staubfrei, sie benötigen keine Mahlung und müssen weniger getrocknet werden als die konventionellen Pigmentzusammensetzungen. Zudem weisen sie noch weitere Vorteile auf, z.B.:
i) Die Wärmebehandlung nach der Synthese, welche bei konventionellen Pigmenten in rein wässriger Suspension erfolgt, kann verkürzt werden;
ii) Die Verwendung eines organischen, einen Harz enthaltenden Trägermediums als Oel-in-Wasser-Emulsion anstelle einer organischen Flüssigkeit ist im Betrieb aus Sicherheitsgründen vorzuziehen und weist den zusätzlichen Vorteil auf, dass konventionelle, mit heizenden Dampfrohren ausgestattete Reaktionskessel verwendet werden können;
iii) Die Pigmentzusammensetzungen, insbesondere diejenigen, die eine organische Säure bei ihrer Herstellung z.B. gemäss Verfahrensstufen Ib) involvieren, können in Perlform eingesetzt werden.
   Die so hergestellten Zusammensetzungen weisen daher den Vorteil auf, dass sie auf einfachere Art und Weise rasch isoliert und mit wesentlich weniger Wasser als die vorherigen Zusammensetzungen salzfrei gewaschen werden können.
iv) Harzträgersysteme als Destillate oder Emulsionen, die in Pigmentzusammensetzungen erwünscht sein können, lassen sich als leicht verwendbare Lösung nicht ohne weiteres anwenden; die Verwendung einer organischen Säure zusammen mit dem Trägersystem erlaubt eine leichte Einarbeitung in die Pigmentzusammensetzung von bis anhin nicht zu bearbeitender Harz- und Destillatmengen.

Die mit den erfindungsgemäss hergestellten Pigmentzusammensetzungen erhaltenen Druckfarben und Anstrichstoffe weisen Vorteile in der Applikation auf, z.B. bezüglich Farbstärke, Glanz, Transparenz, usw.

Es ist sehr überraschend, dass die Synthese insbesondere von Azopigmenten in einer wässrig-organischen Mischphase erfolgen kann, ohne dass die Pigmenteigenschaften, z.B. das Kristallwachstum, beeinflusst werden. Ferner erlaubt die Anwesenheit der organischen Phase bei der Pigmentsynthese die Einarbeitung in die Pigmentformulierung von mit wässrigen Systemen unverträglichen Pigmentzusätzen, welche früher nur in einer späteren Stufe, z.B. während der Bereitstellung der Druckfarbe, eingesetzt wurden.

Der Einsatz einer organischen Säure bei der Nachbehandlung gemäss vorliegender Verfahrensstufe Ib) weist auch den Vorteil auf, dass in derartigen Druckfarbenträgersystemen das Pigment in staubfreier dosierbarer Pulverform hergestellt werden kann. Nach einer derartigen Nachbehandlung werden ausserdem die applikatorischen Eigenschaften dieser Pigmentzusammensetzungen verbessert.

Die folgenden Beispiele illustrieren die vorliegende Erfindung:
Beispiel 1: Eine Pigmentsuspension enthaltend 350 g Pigment Rot 57:1 wird wie folgt hergestellt: Die Kupplungskomponente (159 g 2-Hydroxy-3-naphthoesäure) wird in wässrigem Kaliumhydroxid gelöst dann mit einer KOH-Lösung eines Kolophoniumharzes auf Abietinsäurebasis (70 g) gemischt. Die Diazolösung enthält als Suspension 155 g mittels HCl und 53 g NaNO₂ diazotierter 2-Amino-5-methylbenzolsulfonsäure und 168 g ca. 80%iges CaCl₂. Die Kupplung erfolgt während 45 Minuten bei pH 10,8-11,0. Eine Stunde nach der Kupplung wird der pH der Suspension auf 5,0 gestellt, die Suspension wird auf 70°C erwärmt und mit 3,5 g einer wässrigen Lösung Hydroxyethylcellulose versetzt. Eine Trägermediumlösung enthaltend 105 g eines aliphatischen Destillats mit Siedepunkt 260-290°C, 350 g 2-Ethylhexansäure und 58 g eines mit einem Kolophonium/Kohlenwasserstoff-Gemisch modifizierten Phenolharzes wird zugegeben. Die Suspension wird während 30 Minuten mittels Holzschindeln gerührt, dann wird der pH auf 8,0 gestellt, und die Suspension wird 30 Minuten weitergerührt. Das Produkt (in Pulverform) wird auf einem Filter mit 250 »m Maschen-Oeffnungen (60 mesh-Filter) isoliert und in einem Ofen bei 60°C getrocknet, bis der Wassergehalt etwa 2 Gew.% beträgt.
Beispiele 2-5: Das Verfahren gemäss Beispiel 1 wird wiederholt, mit dem Unterschied jedoch, dass anstelle des dort eingesetzten Phenolharzes die folgenden Harztypen verwendet werden: Alkydharz ^{®}Lawter 100S (Beispiel 12); Kolophoniummodifiziertes, glycerolverestertes Phenolharz ®Krumbhaar K101 (Beispiel 13) oder kolophoniummodifiziertes pentaerythritolverestertes Phenolharz ^{®}Kelrez 42-405 (Beispiel 14), oder ein Kohlenwasserstoffharz ®Hercules A120 (Beispiel 15).
Beispiel 6: Das Verfahren gemäss Beispiel 1 wird wiederholt, mit dem Unterschied jedoch, dass als Trägersystem eine Lösung enthaltend 105 g eines aliphatischen Destillats mit Siedepunkt 260-290°C, 350 g 2-Ethylhexansäure, 58 g eines mit einem Kolophonium/Kohlenwasserstoff-Gemisch modifizierten Phenolharzes und 7 g eines Leinöles eingesetzt wird.
Beispiel 7: Eine Pigmentsuspension von Pigment Gelb 3 wird wie folgt hergestellt: Die Tetrazokomponente enthält 30,8 g 3,3'-Dichlorbenzidin (70,4 % Reinheit), das mit HCl und 12,0 g NaNO₂ tetrazotiert wurde. Die Kupplungskomponente enthält als Suspension bei pH 6,0 36,5 g Acetoacetmetaxylidid (AAMX), das durch Zugabe von Eisessig fein ausgefällt wurde. Diese Suspension enthält noch 10 g eines aliphatischen Destillates vom Siedepunkt 260-290°C, 0,5 g eines kolloidalen Stabilisators (®Jaguar CP-13), 1,8 g einer Farbstoffkomponente (aus tetrazotierter Benzidin-2,2'-disulfonsäure durch Kupplung mit AAMX hergestellt) und 0,86 g eines quaternären Ammoniumsalzes (wie in Beispiel 1). Die Kupplung erfolgt während 30 Minuten bei pH 4,6-4,7, der pH der erhaltenen Suspension wird auf 7 gestellt, und eine Lösung enthaltend 30 g eines Kolophoniumharzes auf Abietinsäurebasis wird zugegeben. Die Suspension wird auf 80°C erwärmt, während 10 Minuten nachgerührt, dann mittels HCl auf pH 5,5 gestellt und auf 70°C gekühlt und filtriert. Das erhaltene Produkt wird mit kaltem Wasser gewaschen und in einem Ofen bei 60°C getrocknet, bis der Wassergehalt etwa 2 % beträgt.
Beispiele 8: Das Verfahren des Beispiels 7 wird wiederholt, mit dem Unterschied jedoch, dass nach Zugabe des Kolophoniumharzes der pH der Suspension auf 5,0 gestellt wird, nachdem die Temperatur der Suspension auf 70°C eingestellt wurde. 80 g 2-Ethylhexansäure werden zugegeben, und das Gemisch wird während 30 Minuten gerührt. Man stellt dann den pH auf 8,0, rührt das Gemisch während 30 Minuten weiter und isoliert das Produkt auf einem Sieb. Man wäscht das Produkt mit kaltem Wasser und trocknet es in einem Ofen, bis der Wassergehalt 1 % beträgt.
Beispiele 9: Das Verfahren des Beispiels 8 wird wiederholt, mit dem Unterschied jedoch, dass nach Zugabe des Kolophoniumharzes die Temperatur auf 70°C erhöht wird und gleichviel 2-Ethylhexansäure wie im Beispiel 18, jedoch als Na-Salz, zugegeben wird. Man stellt dann den pH der Mischung auf 5, rührt das Gemisch während 30 Minuten weiter und führt dann die im Beispiel 18 beschriebene Nachbehandlung durch.
Beispiel 10: Eine Pigmentsuspension von Pigment Gelb 13 wird nach dem Verfahren des Beispiels 7 hergestellt, mit dem Unterschied jedoch, dass das aliphatische Destillat zur Kupplungskomponente als Emulsion gegeben wird. Diese Emulsion enthält 10 g eines aliphatischen Destillats (Siedepunkt 260-290°C), 1 g Kolophoniumharz auf Abietinsäurebasis, 0,5 g einer 50%igen NaOH-Lösung und 30 g Wasser. Das Produkt wird gekuppelt und gemäss Beispiel 7 aufgearbeitet.

## Patentansprüche

1. Verfahren zur Herstellung einer Pigmentzusammensetzung, indem man ein Pigment vor oder während seiner Synthese mit einem mit Wasser nicht mischbaren, ein Harz enthaltenden Trägermedium behandelt und dann die Pigmentsynthese unter Bildung der das Pigment und das Trägermedium enthaltenden Pigmentzusammensetzung vervollständigt, und dann Ia) die erhaltene Pigmentzusammensetzung isoliert, oder gegebenenfalls
Ib) die erhaltene Pigmentzusammensetzung mit einer aliphatischen organischen Säure und gegebenenfalls einem mit Wasser nicht mischbaren Trägermedium weiter behandelt, den pH-Wert des resultierenden Gemisches zuerst auf pH unter 7,0 dann über 7,0 einstellt, so dass die organische Säure in die wässrige Phase überführt wird, und dann die das Pigment und das Trägermedium enthaltende Pigmentzusammensetzung isoliert.

2. Verfahren gemäss Anspruch 1, worin gemäss Verfahrensstufe Ia) das Trägermedium mit einem oder mehreren Pigmentvorläufern behandelt wird.

3. Verfahren gemäss Anspruch 2, worin der Pigmentvorläufer eine Diazo- oder Tetrazokomponente und/oder eine Azokupplungskomponente ist.

4. Verfahren gemäss Anspruch 1, wonach gemäss Verfahrensstufe Ia) das Trägermedium dem Pigmentsynthesereaktor vor oder während der Pigmentsynthese zugegeben wird.

5. Verfahren gemäss Anspruch 1, wonach das Trägermedium in Form einer Schmelze, einer Lösung, als einfache organische Flüssigkeit oder als Emulsion, gegebenenfalls in Kombination mit einem emulgierenden Stabilisator, verwendet wird.

6. Verfahren gemäss Anspruch 1, worin das Harz ein Alkyd- oder ein Phenolharz oder ein kolophoniummodifiziertes Harz davon, oder ein Malein- oder Acrylharz ist.

7. Verfahren gemäss Anspruch 1, worin das Trägermedium zusätzlich ein Oeldestillat mit einem Siedepunkt zwischen 260-290°C, ein Pflanzenöl oder ein Derivat davon, ein Leinöl oder ein Tungöl enhält.

8. Verfahren gemäss Anspruch 1, worin die aliphatische organische Säure eine lineare oder verzweigte, gesättigte oder ungesättigte Carbonsäure mit 5 bis 18 C-Atomen ist.

9. Verfahren gemäss Anspruch 8, worin die Säure eine geradkettige oder verzweigte gesättigte Alkylcarbonsäure mit 6 bis 10 C-Atomen ist.

10. Verfahren gemäss Anspruch 1, worin das relative Verhältnis Pigment zum Trägermedium in der Endpigmentzusammensetzung zwischen 1:2 und 20:1 liegt.

11. Verfahren gemäss Anspruch 1, worin der Wassergehalt der Endpigmentzusammensetzung Werte zwischen weniger als 1 Gew.% und 75 Gew.% beträgt.

12. Verfahren gemäss Anspruch 1, worin das Pigment ein Azopigment ist.

## Claims

1. A process for the production of a pigment composition comprising Ia) treating a pigment, before or during its synthesis, with a water-immiscible carrier medium containing a resin, and then completing the pigment synthesis to produce a pigment composition comprising the pigment and the carrier medium, and then Ia) isolating the resulting pigment composition or, if desired, Ib) further treating the resulting pigment composition with an aliphatic organic acid and optionally a water-immiscible carrier medium, adjusting the pH of the resulting mixture to below 7.0 and then to above 7.0, thereby transferring the organic acid to the aqueous phase, and then isolating the pigment composition comprising the pigment and the carrier medium.

2. A process according to claim 1 wherein, in process step Ia), the carrier medium is treated with one or more pigment precursors.

3. A process according to claim 2, wherein the pigment precursor is a diazo or tetrazo component and/or an azo coupling component.

4. A process according to claim 1 wherein, in process step Ia), the carrier medium is added to the pigment synthesis reactor before or during the pigment synthesis.

5. A process according to claim 1 wherein the carrier medium is added in the form of a melt, a solution, as a simple organic liquid or as an emulsion, optionally in combination with an emulsifying stabilizer.

6. A process according to claim 1 wherein the resin is an alkyd resin or a phenolic resin or a rosin modification thereof, or a maleic or acrylic resin.

7. A process according to claim 1 wherein the carrier medium additionally comprises an oil distillate having a boiling point of 260-290°C, a vegetable oil or derivative thereof, linseed oil or tung oil.

8. A process according to claim 1 wherein the aliphatic organic acid is a linear or branched, saturated or unsaturated carboxylic acid having 5 to 18 carbon atoms.

9. A process according to claim 8 wherein the acid is a straight-chain or branched saturated alkanecarboxylic acid having 6 to 10 carbon atoms.

10. A process according to claim 1 wherein the relative proportion of pigment to carrier medium in the final pigment composition is between 1:2 and 20:1.

11. A process according to claim 1 wherein the water content of the final pigment composition is between less than 1 % and 75 % by weight.

12. A process according to claim 1 wherein the pigment is an azo pigment.

## Revendications

1. Procédé de préparation d'une composition pigmentaire, selon lequel :
1a) on traite un pigment, avant ou pendant sa synthèse, par un milieu de support ou véhicule non miscible et contenant une résine, puis l'on parachève la synthèse du pigment avec formation de la composition pigmentaire contenant le pigment et le milieu de support ou véhicule, puis la) on isole la composition pigmentaire obtenue, ou bien, éventuellement
1b) on soumet la composition pigmentaire obtenue à la poursuite d'un traitement à l'aide d'un acide aliphatique organique et éventuellement d'un milieu de support ou véhicule non miscible à l'eau, on ajuste le pH du mélange résultant tout d'abord à une valeur inférieure à 7,0, puis supérieure à 7,0, de sorte que l'acide organique passe dans la phase aqueuse, puis l'on isole la composition pigmentaire contenant le pigment et le milieu de support ou véhicule.

2. Procédé selon la revendication 1, dans lequel, selon l'étape opératoire 1a), on traite le milieu de support ou le véhicule à l'aide d'un ou plusieurs précurseurs de pigment.

3. Procédé selon la revendication 2, dans lequel le précurseur de pigment est un composant diazotable ou tétrazotable et/ou est un copulant pour obtention d'un composé azoïque.

4. Procédé selon la revendcation 1, selon lequel, dans l'étape opératoire 1a), le milieu de support ou véhicule est ajouté dans le réacteur de synthèse du pigment avant ou pendant cette synthèse du pigment.

5. Procédé selon la revendication 1, selon lequel on utilise le milieu de support ou véhicule sous forme d'une masse fondue, sous forme d'une solution, sous forme d'un liquide organique simple ou sous forme d'une émulsion, éventuellement en combinaison avec un stabilisant émulsifiant.

6. Procédé selon la revendication 1, selon lequel la résine est une résione alkyde ou une résine phénolique ou une résine qui en dérive par modification par de la colophane, ou une résine maléïnique ou acrylique

7. Procédé selon la revendication 1, selon lequel le milieu de support ou véhicule contient en outre un distillat (d'huile de pétrole) ayant un point d'ébullition compris entre 260 et 290°C, une huile végétale ou un dérivé d'une telle huile, une huile de lin ou une huile de Tung.

8. Procédé selon la revendication 1, selon lequel l'acide aliphatique organique est un acide carboxylique linéaire ou ramifié, saturé ou insaturé, comportant 5 à 18 atomes de carbone.

9. Procédé selon la revendication 8, selon lequel l'acide est un acide alkylcarboxylique linéaire ou ramifié, saturé, comportant 6 à 10 atomes de carbone.

10. Procédé selon la revendication 1, selon lequel le rapport relatif entre le pigment et le milieu de support ou le véhicule se situe dans la composition pigmentaire finale entre 1:2 et 20:1.

11. Procédé selon la revendication 1, selon lequel la teneur en eau de la composition pigmentaire finale présente des valeurs comprises entre moins de 1% en poids et 75 % en poids.

12. Procédé selon la revendication 1, dans lequel le pigment est un pigment azoïque.
